# EUROPÄISCHE PATENTSCHRIFT

(11) **EP 2 677 374 B1**
(45) Veröffentlichungstag und Bekanntmachung des Hinweises auf die Patenterteilung: **11.03.2020**
(21) Anmeldenummer: 13002975.4
(22) Anmeldetag: 11.06.2013
(51) Int. Cl.: G05B 13/04

(54) **Verfahren zur Überwachung einer Heizungsanlage**
Method for monitoring a heating system
Procédé de surveillance d'une installation de chauffage

(30) Priorität: 19.06.2012 DE 102012012040
(43) Veröffentlichungstag der Anmeldung: 25.12.2013
(73) Patentinhaber: ista International GmbH, 45131 Essen (DE)
(72) Erfinder: Linden, Jens, 45131 Essen (DE); Böwer, Bernd, 41539 Dormagen (DE)
(74) Vertreter: Cohausz Hannig Borkowski Wißgott

(56) Entgegenhaltungen:
- DE-A1-102009 056 123

## Beschreibung

Die Erfindung betrifft ein Verfahren zur Überwachung einer Heizungsanlage. Im Stand der Technik ist es bekannt, dass für eine energetische Bewertung von brennstoffbefeuerten Heizungsanlagen der Anlagennutzungsgrad grundsätzlich eine relevante Größe darstellen kann. Dieser Anlagennutzungsgrad gibt an, wie viel der eingesetzten Brennstoffenergie in nutzbare Energie umgesetzt wird. Der Anlagennutzungsgrad ist definiert als Quotient aus der erzeugten Nutzenergie und der eingesetzten Primärenergie.

Dabei ist es weiterhin bekannt, dass die eingesetzte Primärenergie von brennstoffbefeuerten Heizungsanlagen erfasst werden kann durch Messung der eingesetzten Brennstoffmenge innerhalb eines bestimmten Zeitintervalls, bei einer Gasanlage also beispielsweise durch wiederholtes Ablesen eines Gaszählers und Multiplikation des verbrauchten Gasvolumens mit dem Brennwert des Gases. In ähnlicher Weise kann wiederholt bei ölbefeuerten Heizungen das Ölvolumen bestimmt werden und mit dem entsprechenden Brennwert des Öles multipliziert werden, um die eingesetzte Primärenergie zu erhalten. Bei einstufigen Brennern gibt es darüber hinaus die Möglichkeit, anhand der Brennerlaufzeit die Brennstoffmenge zu bestimmen. Dazu müssen der installierte Düsentyp sowie der eingestellte Düsendrück bekannt sein.

Die erzeugte Nutzenergie hingegen kann in üblicher Weise bei wassergeführten Heizungsanlagen über wenigstens einen Wärmemengenzähler erfasst werden. So kann beispielsweise ein zentraler Wärmemengenzähler vorgesehen sein, der die gesamte erzeugte Nutzenergie erfasst, die von dem wenigstens einen Wärmeerzeuger einer Heizungsanlage erzeugt wird oder es können mehrere Wärmemengenzähler eingesetzt werden, beispielsweise solche, die jeweils bestimmten Nutzkreisen zugeordnet sind, wobei sich sodann die gesamte erzeugte Nutzenergie ergibt durch Summenbildung der Nutzenergien, die mit den jeweils einzelnen Wärmemengenzählern erfasst werden.

Wenngleich der Anlagennutzungsgrad ein solcher Wert ist, der eine energetische Bewertung von brennstoffbefeuerten Heizungsanlagen zulässt, so ist es doch als Problem im Stand der Technik bekannt, dass dieser Anlagennutzungsgrad keine konstante Größe darstellt, sondern selbst bei optimal eingestellter Heizungsanlage variiert, nämlich insbesondere in nichtlinearer Weise in Abhängigkeit von der aktuellen Auslastung der Heizungsanlage. Aus diesem Grund wird beispielsweise in der DIN 4702 Teil 8 ein sogenannter Norm-Nutzungsgrad definiert als das gewichtete Mittel der Nutzungsgrade an 5 typischen Leistungsstufen des Wärmeerzeugers, um eine skalare und somit einfach vergleichbare Größe zur Bewertung eines Wärmeerzeugers zu erhalten.

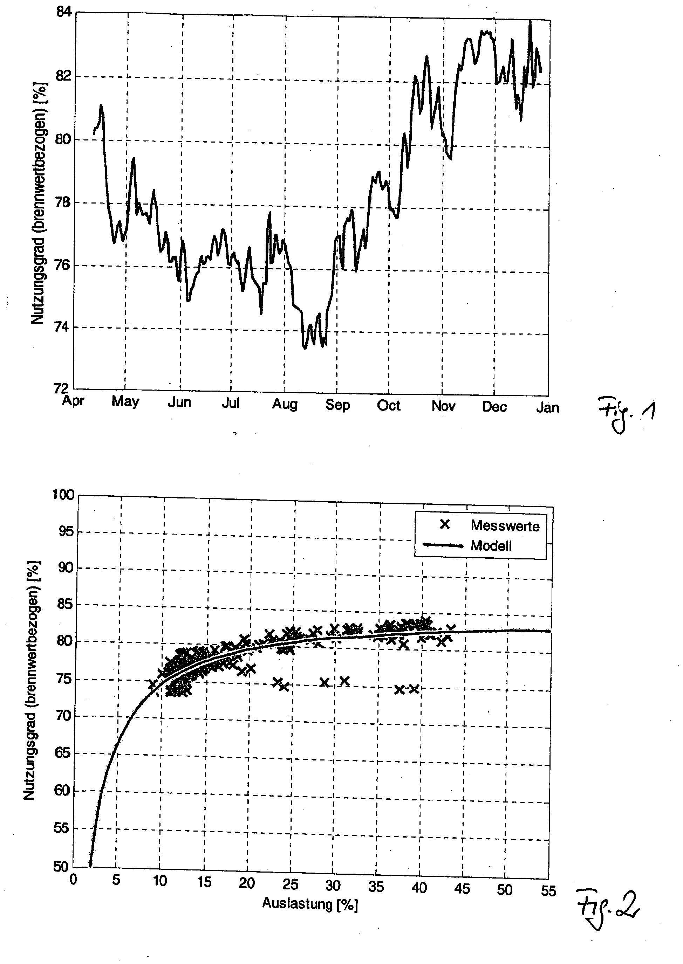

Die Auslastung einer Heizungsanlage ist dabei definiert durch die Menge der erzeugten Nutzenergie bezogen auf die maximal mögliche Energieabgabe des wenigstens einen Wärmeerzeugers für ein bestimmtes Zeitinterval, die wie vorgenannt, beispielsweise durch Wärmemengenzähler innerhalb des bestimmten Zeitintervalles erfasst werden kann. Sofern mehr als ein Wärmeerzeuger Verwendung findet wird die Summe der maximal möglichen Energieabgaben aller Wärmeerzeuger der Heizungsanlage herangezogen. So zeigt die Figur 1 beispielsweise eine im Stand der Technik bekannte Abhängigkeit des Anlagennutzungsgrades über einige Monate eines Jahres, wobei sich zeigt, dass in den Sommermonaten der Nutzungsgrad niedriger liegt, obwohl dies nicht bedeuten muss, dass die Heizungsanlage schlecht läuft oder gar ein Anlagenfehler vorliegt, der zu einer reduzierten Anlageneffizienz führt. Vielmehr ist dies darauf zurückzuführen, dass in den Sommermonaten die Auslastung einer Heizungsanlage geringer ist, also das Verhältnis der erzeugten Nutzenergie zur maximal möglichen Energieabgabe der zur Verfügung stehenden Wärmeerzeuger der Heizungsanlage und sich die hier beschriebene Abhängigkeit des Anlagennutzungsgrades somit durch die vorgenannte Nichtlinearität ergibt.

Eine solche im Stand der Technik bekannte Nichtlinearität des Anlagennutzungsgrades von der Auslastung wird beispielhaft durch die Figur 2 gezeigt, die verdeutlicht, dass eine Aussage über den Anlagennutzungsgrad keine wesentliche Relevanz entfaltet, sofern nicht gleichzeitig eine Information über die Auslastung der Anlage vorliegt.

Es ist daher eine Aufgabe der Erfindung ein Verfahren zur Überwachung einer Heizungsanlage bereitzustellen, das die grundsätzliche Abhängigkeit des Nutzungsgrades von einer Auslastung berücksichtigt und das Problem der Abhängigkeit eliminiert.

Diese Aufgabe wird gemäß der Erfindung durch ein Verfahren zur Überwachung einer Heizungsanlage gelöst, bei dem zeitlich wiederholend mit jedem Ablauf eines ersten Zeitintervalles ein Überwachungswert der Heizungsanlage berechnet wird, welcher einen Anlagennutzungsgrad repräsentiert oder von dem der Anlagennutzungsgrad abhängig ist oder der von dem Anlagennutzungsgrad abhängig ist, wobei die Berechnung anhand eines zeitlich variablen Modells in Abhängigkeit einer mittleren Auslastung der Heizungsanlage erfolgt, wobei das Modell die Abhängigkeit zwischen der Auslastung der Heizungsanlage und der aufgewendeten normierten Primärenergie beschreibt und wobei das Modell vor der Berechnung des Überwachungswertes jeweils nach Ablauf eines zweiten Intervalles gebildet oder geändert wird in Abhängigkeit von messtechnisch zuvor in dem zweiten Zeitintervall erfassten Heizungsanlagenparametern und der Überwachungswert mit einem Vergleichswert, insbesondere einem gespeicherten Grenzwert verglichen wird, wobei bei einer Änderung des berechneten Überwachungswertes über den Vergleichswert hinweg eine Signalisierung der Änderung durchgeführt wird.

Ein wesentlicher Kerngedanke des Verfahrens ist es, zum einen ein zeitlich variables Modell für die Berechnung heranzuziehen, in dessen Bildung oder Änderung historische, dass heißt zeitlich zurückliegende Heizungsanlagenparameter eingehen und in dieses Modell nicht die aktuelle Auslastung der Heizungsanlage als Berechnungsgrundlage eingeht, sondern vielmehr eine mittlere Auslastung der Heizungsanlage, die für die jeweilige Heizungsanlage festgelegt beziehungsweise berechnet werden kann. Eine solche mittlere Auslastung kann z.B. die mittlere zu erwartende Auslastung des Wärmeerzeugers in einem Standardwetterjahr sein oder auch in einem anderen festzulegenden Zeitraum.

Eine weitere Möglichkeit ist eine fest definierte Auslastung zu wählen, wie sie beispielsweise in DIN 4702 Teil 8 zur Berechnung des Norm-Nutzungsgrades vorgeschlagen wird. Nachteilig wäre bei einem solchen Vorgehen jedoch, dass weder eine eventuelle Überdimensionierung der Heizungsanlage noch örtliche Klimabegebenheiten in die mittlere Auslastung einfließen würden, d.h. es würde eine theoretische Soll-Auslastung verwendet anstelle einer individuellen Auslastung basierend auf Mess-, Klima- und Anlagendaten.

Es wird so mit Bezug auf die eingangs genannte im Stand der Technik gemäß Figur 2 bekannte Nichtlinearität zwischen Auslastung und Anlagennutzungsgrad derjenige Arbeitspunkt der Auslastung als eine mittlere Auslastung festgelegt, an welchem die Überwachung des Nutzungsgrades der Heizungsanlage gemäß dem vorgeschlagenen Verfahren stattfindet, um so über die Zeit hinweg, beispielsweise über ein Jahr, eine Vergleichbarkeit des Anlagennutzungsgrades mit jeder Berechnung erzielen zu können und hierdurch das Problem der nichtlinearen Abhängigkeit zu eliminieren.

Trotz der Verwendung einer mittleren Auslastung können gemäß dem vorliegenden Verfahren aktuelle Änderungen hinsichtlich des Nutzungsgrades an dem festgelegten Arbeitspunkt, dass heißt der festgelegten mittleren Auslastung individuell mit jeder Berechnung, dass heißt nach Ablauf des vorgenannten ersten Zeitintervalls, wie beispielsweise täglich oder wöchentlich, festgestellt werden, da in die Modellberechnung in einem zweiten Zeitintervall, beispielsweise monatlich, zumindest aber mit einer längeren Zeitdauer als das erste Zeitintervall, die unmittelbar zurückliegenden Heizungsanlagenparameter eingehen, wie z.B. die erfassten Messwerte von erzeugter Nutzenergie und/oder verbrauchter Primärenergie.

Eine mögliche erfindungsgemäße Ausgestaltung kann es hier vorsehen, dass in dem genannten zweiten Zeitintervall ein Modell gebildet wird, dass anhand der unmittelbar zurückliegenden Heizungsparameter die nichtlineare Abhängigkeit zwischen (brennwertbezogenem) Nutzungsgrad und Auslastung beschreibt, so wie es die Figur 2 zeigt.

Hierfür kann es vorgesehen sein, innerhalb des zweiten Zeitintervalls beispielsweise von 1 bis 3 Monaten, mehrfach, beispielsweise täglich, messtechnisch die erzeugte Nutzenergie und die eingesetzte Primärenergie zu bestimmen, beispielsweise mittels Wärmemengenzähler und Zähler der verbrauchten Brennstoffmenge, wie zuvor beschrieben. Durch Quotientenbildung dieser Messwerte ergibt sich der jeweilige Anlagennutzungsgrad für dieses Wertepaar. Die gleichzeitig bei diesem Wertepaar vorliegende Auslastung kann bestimmt werden durch denselben Messwert der erzeugten Nutzenergie (Wärmemengezähler) dividiert durch die maximal mögliche Energieabgabe der Heizungsanlage im betrachteten Zeitraum, in welchem mehrfach pro zweiten Intervall diese Messung stattfindet. Diese maximale Energieabgabe ist üblicherweise ein konstanter Wert für die Heizungsanlage.

Es kann so für alle Messwerte, die innerhalb des zweiten Zeitintervalles erhoben werden, die in diesem zweiten Zeitintervall konkret vorliegende nichtlineare Abhängigkeit des Nutzungsgrades von der Auslastung bei dieser betrachteten Heizungsanlage aus der Schar aller so erfassten Meßwerte bestimmt werden, so wie es die Figur 2 beispielhaft zeigt. Hierfür können z.B. in der Mathematik grundsätzlich bekannte Fit- oder Regressionsmethoden herangezogen werden, um den Zusammenhang im Modell, insbesondere formelmäßig zu beschreiben.

Es kann dabei auch vorgesehen sein, zwecks Erhöhung der Genauigkeit des Modells für verschiedene Bereiche der Auslastung verschiedene Modellbeschreibungen zu bilden und diese für alle Auslastungen zu einem gemeinsamen Modell zu verbinden. So kann beispielsweise der Bereich kleiner Auslastungen durch eine Hyperbel modelliert werden, hingegen der Bereich großer Auslastungen durch eine Gerade. Auch kann ein Modell aus mehreren stückweise zusammengesetzten Modell-Beschreibungen gebildet werden, z.B. aus mehreren stückweise geltenden Geraden-Modell-Beschreibungen.

Ein gebildetes Modell beschreibt so jeweils für das zurückliegenden zweite Zeitintervall, insbesondere welches endet zum Zeitpunkt der Berechnung des Überwachungswertes, die jeweils im Modell erfasste Abhängigkeit, wofür zu diesem Zeitpunkt die in dem zweiten Zeitintervall bis dahin historisch zurückliegenden erfassten Wertepaare in die Modellbildung, beziehungsweise Änderung des Modells eingehen. Daher ist das Modell nicht statisch und wird jeweils nach Ablauf des zweiten Intervalles neu berechnet oder geändert.

Durch Feststellung der mittleren Auslastung - wie zuvor genannt - und nachfolgend auch noch näher beschrieben kann sodann anhand des Modell der Wert der gesuchte Überwachungswert, insbesondere ein normierter Anlagennutzungsgrad, z.B. eine Jahresanlagenutzungsgrad bestimmt werden, um diesen für den genannten Vergleich heranzuziehen.

Wie bereits eingangs erwähnt, entspricht der Anlagennutzungsgrad dem Quotienten von erzeugter Nutzenergie und eingesetzter Primärenergie, ist also immer kleiner 1 aufgrund unvermeidbarer Verluste bei der Umwandlung der Primärenergie in die Nutzenergie.

Der Anlagennutzungsgrad kann somit auch dargestellt werden als Quotient der aufgewendeten normierten Primärenergie (= Aufwand), also die in einem Zeitintervall aufgewendete Primärenergie, die auf die in diesem Zeitintervall maximal mögliche Energieabgabe wenigstens eines Wärmeerzeugers der Heizungsanlage normiert ist und der Auslastung der Heizungsanlage, welche in analoger Weise die auf die maximal mögliche Energieabgabe wenigstens eines Wärmeerzeugers der Heizungsanlage normierte erzeugte Nutzenergie widerspiegelt.

Aufgrund der Tatsache, dass somit der Anlagennutzungsgrad grundsätzlich dargestellt werden kann als Auslastung der Heizungsanlage, dividiert durch Aufwand beziehungsweise der aufgewendeten normierten Primärenergie, kann es in einer besonders bevorzugten Ausführung des erfindungsgemäßen Verfahrens vorgesehen sein, ein solches Modell zu verwenden, dass die Abhängigkeit, insbesondere eine lineare Abhängigkeit zwischen der Auslastung der Heizungsanlage und dem Aufwand / der aufgewendeten normierten Primärenergie beschreibt, wobei zur Bildung des Modells die Auslastung und die aufgewendete Primärenergie innerhalb des vorgenannten zweiten Zeitintervalls, wie beispielsweise innerhalb von einem bis mehreren Monaten, beispielsweise drei Monaten, mehrfach, besonders bevorzugt täglich, messtechnisch erfasst werden und anhand der erfassten Messwerte, also der jeweiligen Wertepaare von Auslastung und Aufwand (gleich aufgewendete normierte Primärenergie) eine das Modell bildende und die Abhängigkeit beschreibende Funktion, insbesondere eine lineare Funktion gebildet oder eine in einem vorherigen Verfahrensschritt bereits gebildete Funktion geändert wird.

Es besteht demnach erfindungsgemäß die Möglichkeit, innerhalb des zweiten Zeitintervalls mehrfach, wie beispielsweise täglich, Messwertepaare aus Aufwand und Auslastung der Heizungsanlage mittels der bereits eingangs genannten Zähler für erzeugte Wärmemenge und Primärenergie zu erfassen. Aus dieser Vielzahl von Wertepaaren kann demnach ein Modell gebildet werden, das die Abhängigkeit beschreibt, beispielsweise in Form einer Geradengleichung, die zum Beispiel durch eine mathematisch durchgeführte lineare Regression oder durch andere geeignete Verfahren ermittelt werden kann. Dabei kann das Modell z.B. dem Eingangsparameter Auslastung den Ausgangsparameter Aufwand zuordnen und/oder dem Eingangsparameter Aufwand den Ausgangsparameter Auslastung zuordnen. Das Modell kann hinsichtlich der Zuordnung beider Wertepaare zueinander bidirektional oder auch nur unidirektional sein.

Ein solches Modell, insbesondere also eine Geradengleichung, beschreibt demnach die Abhängigkeit zwischen Auslastung und Aufwand der jeweils betrachteten Heizungsanlage für das zurückliegenden zweite Zeitintervall, insbesondere welches endet zum Zeitpunkt der Berechnung des Überwachungswertes, wofür zu diesem Zeitpunkt die in dem zweiten Zeitintervall bis dahin historisch zurückliegenden erfassten Wertepaare in die Modellbildung beziehungsweise Änderung eingehen.

In Kenntnis einer solchen Abhängigkeit, die aufgrund der Tatsache, dass mit jedem Verstreichen des ersten Zeitintervalls, beispielsweise eines Tages oder einer Woche neue Wertepaare erfasst werden/wurden, die in die Bildung des Modells eingehen können, ist es auch hier ersichtlich, dass das hier für die Berechnung des Überwachungswertes herangezogene Modell kein statisches, sondern ein zeitlich variables Modell ist.

Für jede Art des verwendeten Modells kann es beispielsweise auch vorgesehen sein, das Modell auch mittels des rekursiven Least-square-Verfahrens mit einem Gedächtnisfaktor von einigen Tagen, als Beispiel hier von 30 Tagen, zu bilden. Bevorzugt gehen in die Modellbildung also nur diejenigen erfassten Wertepaare von Auslastung und Aufwand ein, die in dem zweiten Zeitintervall erfasst sind. Generell kann ein beliebiges adaptives numerisches Verfahren zur Systemidentifikation eingesetzt werden.

Um zu verhindern, dass eventuelle Ausreißer bei den erfassten Wertepaaren die Modellbildung verfälschen, kann es vorgesehen sein, dass ein im zweiten Zeitintervall jeweils erfasstes Wertepaar, wie beispielsweise von Auslastung und Aufwand (= normierter Primärenergie), das noch nicht in die Bildung beziehungsweise Änderung des Modells eingeflossen ist, dahingehend überprüft wird, ob eine Abweichung zumindest eines Wertes des Wertepaares von dem bisherigen Modell vorliegt und in dem Fall, wenn die Abweichung einen vorgegebenen Wert überschreitet, das jeweilige Wertepaar von der Neubildung beziehungsweise Änderung des Modells ausgeschlossen wird.

Alternativ oder auch kumulativ kann es vorgesehen sein, in einer solchen Überschreitung der Abweichung vom bisherigen Modell einen Fehlerfall zu erkennen und eine Signalisierung vorzunehmen, wenn eine solche Überschreitung erfolgt. Eine solche Signalisierung kann zum Beispiel optisch, akustisch oder auch durch eine Telekommunikation und Übermittlung einer Nachricht erfolgen, beispielsweise durch eine E-Mail, SMS oder ähnliche Nachricht über ein Telekommunikationsnetzwerk an einen Betreiber oder Überwacher des Heizungsanlage.

Ist nun bei der zuvor beschriebenen bevorzugten Ausführungsform der Modellbildung gemäß des hier beschriebenen Verfahrens die Abhängigkeit zwischen Auslastung und Aufwand bei der in der Heizungsanlage aufgrund der zurückliegenden zweiten Zeitintervall erfassten Wertepaaren durch das Modell bekannt oder gemäß der erstgenannten Ausführung die Abhängigkeit zwischen Anlagennutzungsgrad und Auslastung, so kann in Kenntnis eines für die Heizungsanlage mittleren Auslastungswertes oder bei zweitgenannten Modell auch in Kenntnis eines mittleren Aufwandswertes aus dem zur Verfügung stehenden Modell der jeweils andere Wert bestimmt und, bei zweitgenannten Modell z.B. durch Quotientenbildung Aufwand / Auslastung ein aktueller mittlerer Jahresanlagennutzungsgrad ermittelt werden und dieser Wert den eingangs genannten Überwachungswert bilden, der sodann mit einem Vergleichswert, zum Beispiel einem gespeicherten Grenzwert verglichen werden kann, um eine energetische aktuelle Bewertung der Heizungsanlage vorzunehmen.

Erfindungsgemäß kann es allgemein für jegliches verwendetes Modell vorgesehen sein, die mittlere Auslastung oder beim zweitgenannten Modell auch den mittleren Aufwand der Heizungsanlage zu bestimmen aus einem auf ein Standardwetterjahr bezogenen Energiekennwert, der die Heizungsanlagen aufweisenden Liegenschaft und der maximal möglichen Energieabgabe des wenigstens einen Wärmeerzeugers der Heizungsanlage. Ein solcher Energiekennwert kann z.B. ein primärer Energieverbrauch pro Fläche pro Jahr oder ein primärer Energieverbrauch pro Tag etc. oder auch ein jeweiliger Nutzenergieverbrauch sein.

Der Bezug der mittleren Auslastung oder eines mittleren Aufwandes auf einen Energiekennwert der Liegenschaft in einem Standardwetterjahr hat hierbei unter anderem den Vorteil, dass durch Bezug auf ein Standardwetterjahr eine Vergleichbarkeit mehrerer Liegenschaften zueinander sowie auch ein und derselben Liegenschaft mit seinen früheren Überwachungswerten möglich wird.

Ein Standardwetterjahr für einen bestimmten Standard ist durch typische zu erwartende Zeitreihen von Außentemperatur und anderen relevanten Größen definiert, die den lokalen Klimagegebenheiten entsprechen. Dabei müssen die Zeitreihen eines Standardwetterjahres keine real gemessenen Wetterdaten darstellen, sondern können vielmehr künstlich gebildet sein, um basierend auf Erfahrungswerten einen für die Region typisch zu erwartenden Zeitreihenverlauf bereitzustellen. Nutzt man für die Berechnung eines witterungsabhängigen Verbrauchs einer Liegenschaft ein lineares Modell, welches lediglich von der mittleren Tagesaußentemperatur abhängt, so werden nicht die Informationen der Außentemperaturzeitreihen eines gesamten Jahres benötigt (wie beispielsweise Testreferenzjahre des Deutschen Wetterdienst), sondern lediglich die Anzahl der Heiztage und deren mittlerer Tagesaußentemperatur, wie sie beispielsweise in der VDI 3807 Blatt 1 für verschiedene Standorte in Deutschland gegeben sind.

In einer möglichen ersten vereinfachten Ausführung der Erfindung kann es vorgesehen sein, dass in einer Rechenanlage zur Berechnung des Überwachungswertes der Energiekennwert aus einem zur Liegenschaft gehörigen Energiepass gespeichert ist. Bekannter Weise umfasst ein Energiepass einen Energiekennwert, der einen primären Energieverbrauch pro Jahr und Fläche darstellt, so dass in Kenntnis der Fläche einer Liegenschaft die mittlere erzeugte Primärenergie eines Zeitintervalls, beispielsweise eines Tages oder auch gleich eines gesamten Jahres bestimmt wird und sich hieraus der mittlere Aufwand eines solchen Standardwetterjahres, auf welches sich der Energiepass bezieht, in Kenntnis der maximalen Leistung bzw. der maximal möglichen Energieabgabe des wenigstens einen Wärmeerzeugers der Heizungsanlage berechnen lässt, insbesondere durch Normierung, dass heißt durch Quotientenbildung, der mittleren Primärenergie eines Zeitintervalls, insbesondere eines Tages und dieser vorgenannten maximal möglichen Energieabgabe im diesem Zeitintervall.

Ist demnach in diesem Ausführungsbeispiel ein mittlerer Aufwand durch Angaben der Informationen aus einem Energiepass in einer Rechenanlage zur Berechnung des Überwachungswertes bekannt, so kann dieser mittlere Aufwand herangezogen werden, um anhand des zugrundeliegenden Modells den zu dieser Aufwand gehörenden Aulastungswert zu ermitteln und durch Quotientenbildung dieser Werte auf den mittlere Anlagennutzungsgrad zu schließen. Ist anders herum der Energiekennwert auf die Nutzenergie bezogen, so kann in Kenntnis der mittleren Auslastung analog der mittlere Aufwand anhand des zugrundeliegenden Modells bestimmt werden und hiernach in gleicher Weise der Quotient zu Bestimmung des mittleren Anlagennutzungsrades gebildet werden.

In einer dem gegenüber bevorzugten Verfahrensvariante kann es auch vorgesehen sein, dass der Energiekennwert nicht aus einem Energiepass übernommen wird, sondern im Rahmen der Durchführung des Verfahrens oder parallel hierzu ermittelt wird aus der messtechnisch erfassten, durch die Heizungsanlage erzeugten Nutz- und/oder Primärenergie.

Bei dieser bevorzugten Verfahrensvariante kann es vorgesehen sein, dass zur Ermittlung des Energiekennwertes in einem zurückliegenden dritten Zeitintervall, insbesondere wenigstens eines Jahres, die eingesetzte Primärenergie pro Zeitintervall oder erzeugte Nutzenergie pro Zeitintervall, z.B. die täglich eingesetzte Primärenergie oder die täglich erzeugte Nutzenergie der Heizungsanlage und die mittlere Außentemperatur des Zeitintervalls, insbesondere die mittlere Tagesaußentemperatur als Wertepaar erfasst werden und aus den erfassten Werten beziehungsweise Wertepaaren wenigstens ein beispielsweise lineares Modell gebildet wird aus dem beziehungsweise denen in Abhängigkeit der mittleren Temperaturen aller Zeitintervalle, in denen geheizt wird, z.B. aller Heiztage eines Standardwetterjahres die mittlere witterungsabhängige Primärenergie oder Nutzenergie eines geheizten Zeitintervalls, z.B. Tagesprimärenergie oder Tagesnutzenergie eines Heiztages und die witterungsunabhängige Primärenergie oder Nutzenergie eines Zeitintervalls, z.B. Tagesprimärenergie oder Tagesnutzenergie bestimmt wird.

Hier wird ein Modell mit Ausgangsgröße Nutzenergie und Eingangsgröße Außentemperatur betrachtet. Generell sind auch dynamische Modelle einsetzbar mit anderen Eingangsgrößen wie z.B. Globalstrahlung oder Windgeschwindigkeit.

Diese Verfahrensvariante hat gegenüber einem Energiepass den Vorteil, dass die tatsächliche konkrete Entwicklung einer Liegenschaft Berücksichtigung findet bei der Ermittlung des hier heranzuziehenden Energiekennwertes, welcher beispielsweise der mittleren gesamten (d.h. witterungsabhängige und witterungsunabhängige) Nutzenergie oder auch Primärenergie pro Zeitintervall, z.B. pro Tag in einem Standardwetterjahr entsprechen kann.

Die zuvor genannte pro Zeitintervall, z.B. täglich erzeugte Nutzenergie oder eingesetzte Primärenergie kann dabei, wie bereits eingangs erwähnt, erfasst werden durch den wenigstens einen Wärmemengenzähler oder Brennstoffvolumenzähler der Heizungsanlage, wobei es vorgesehen sein kann, die mittlere Außentemperatur der geheizten Zeitintervalle, insbesondere Tagesaußentemperatur aller Heiztage aus den am Ort der Liegenschaft mit einem Temperatursensor gemessenen Außentemperaturen zur bestimmen oder alternativ auch einen jeweiligen Wert für die mittlere Außentemperatur aus einer liegenschaftsexternen Wetterdatenbank auszulesen. Beispielsweise werden solche Wetterdatenbanken von Serviceprovidern im Internet oder auch über andere Kommunikationswege zur Verfügung gestellt, so dass keine unmittelbare Notwendigkeit besteht, die konkret an der Liegenschaft vorliegende mittlere Außentemperatur für jede Heizungsanlage beziehungsweise jede Liegenschaft individuell zu ermitteln. Vielmehr kann es auch vorgesehen sein, die geografische Lage der Liegenschaft als Eingangsparameter zu verwenden, um anhand dieses Parameters aus einer solchen Wetterdatenbank die zugehörige, an diesem Ort geltende mittlere Außentemperatur des jeweiligen Zeitintervalls, insbesondere Tages zu bestimmen.

Anhand der zurückliegend, beispielsweise über wenigstens ein Jahr jeweils täglich oder auch in anderen (vierten) Zeitintervallen erfassten Wertepaaren aus Nutzenergie oder Primärenergie und mittlerer Außentemperatur kann in einer beispielhaften Ausführung eine erste lineare Abhängigkeit bestimmt werden, welche die mittlere Außentemperatur der Zeitintervalls, insbesondere mittlere Tagesaußentemperatur und die jeweils erzeugte witterungsabhängige Nutzenergie oder Primärenergie gegenüberstellt. Ein solches Modell kann beispielsweise durch eine Gerade gebildet werden, zum Beispiel durch geeignete mathematische Verfahren, wie eine lineare Regression. Aus denselben erfassten Daten kann auch witterungsunabhängig im jeweiligen betrachteten Intervall insbesondere täglich die erzeugte Nutzenergie oder eingesetzt Primärenergie bestimmt werden, die in Abhängigkeit der mittleren Außentemperatur, insbesondere Tagesaußentemperatur idealerweise eine Konstante darstellt oder aber eine Gerade mit sehr kleiner Steigung.

Für eine mittlere Außentemperatur des Zeitintervalls, insbesondere Tagesaußentemperatur des gesamten Standardwetterjahres, die entweder individuell für die Liegenschaft für die jeweiligen witterungsabhängigen Heiztage bestimmt wird, oder wie eingangs genannt, aus einer Wetterdatenbank ermittelt wird, kann sodann der für das Zeitintervall mittlere insbesondere tägliche witterungsabhängig erzeugte Nutzenergiewert oder eingesetzte Primärenergiewert aus dem gebildeten Modell bestimmt werden.

Hierbei ist weiter zu berücksichtigen, dass dieser Wert der z.B. täglich erzeugten Nutzenergie oder eingesetzte Primärenergie, die aus dem Modell in Abhängigkeit der mittleren Außentemperatur des Zeitintervalls bestimmt wird, einen Offset aufweist, der sich durch diejenige Nutzenergie bzw. Primärenergie ergibt, die täglich witterungsunabhängig, dass heißt in jedem Fall erzeugt bzw. eingesetzt wird. Es kann sich hierbei beispielsweise um Nutzenergie bzw. Primärenergie handeln, die benötigt wird, um Brauchwasserspeicher zu beheizen, auch wenn kein Heizbetrieb zu Erwärmen von Räumen in einer Liegenschaft aufgewandt wird.

Ein solcher Offset kann durch dasselbe oder ein anderes lineares Modell beziehungsweise die vorgenannte Konstante aus den Wertepaaren ermittelt und beispielsweise in Abzug gebracht werden, um die witterungsunabhängig erzeugte Nutzenergie oder eingesetzte Primärenergie für jedes Zeitintervall, insbesondere für jeden Tag zu bestimmen. Durch Multiplikation mit der Anzahl der witterungsabhängig geheizten Zeitintervalle, insbesondere der witterungsabhängigen Heiztage eines Jahres ergibt sich somit die gesamte witterungsabhängig aufgewandte Nutzenergie oder Primärenergie und durch Multiplikation des Offsets, dass heißt der witterungsunabhängig erzeugten Nutzenergie / Primärenergie mit der Anzahl der gesamten Zeitintervalle eines Jahres, insbesondere 365 Tagen für ein Jahr ergibt sich die witterungsunabhängige Jahresnutzenergie oder Jahresprimärenergie, so dass durch die Summenbildung beider Werte die gesamte in einem Jahr erzeugte Nutzenergie oder eingesetzte Primärenergie berechnet und so dann auf einen Tag herunterskaliert werden kann.

Es ergibt sich hierdurch die gesamte Nutzenergie oder Primärenergie pro Tag, aus der die mittlere Tagesenergie und aus der wiederum sodann durch Quotientenbildung mit der maximal an einem Tag möglichen Energieabgabe des wenigstens einen Wärmeerzeugers die mittlere Auslastung (bei Nutzenergiebetrachtung) oder der mittlerer Aufwand (bei Primärenergiebetrachtung) im Sinne der Erfindung ermittelt werden kann, die/der wie bereits bei der vorherigen Ausführung benannt, verwendet werden kann, um mit dem eingangs genannten bevorzugt linearen Modell, das Auslastung und Aufwand gegenüberstellt, den konkreten jeweils anderen Wert, also entweder den Wert für den Aufwand oder die Auslastung zu bestimmen und hieraus wiederum durch Quotientenbildung den Überwachungswert für den mittleren Nutzungsgrad zu bestimmen.

Bei der vorbeschriebenen Ausführung bei der wenigstens ein Modell berechnet wird, welches die erzeugte Nutzenergie / eingesetzte Primärenergie gegen die mittlere Außentemperatur des betrachteten Zeitintervalls (z.B. Tag) berücksichtigt, bei der also täglich oder auch in anderen zeitlichen Intervallen mit einem Wärmemengenzähler die erzeugte Nutzenergie oder mit einem Brennstoffzähler die Primärenergie ermittelt wird, kann es vorgesehen sein, dass vorder Bildung beziehungsweise Änderung des zuvor genannten wenigstens einen Modells zur Ermittlung des Energiekennwertes der Wert der erfassten erzeugten Nutzenergie oder der eingesetzten Primärenergie korrigiert wird in Abhängigkeit einer Leerstandsinformation der Liegenschaft.

So kann es nämlich vorgesehen sein, dass eine Liegenschaft beispielsweise nicht vollständig belegt ist, zum Beispiel nur zu 50 %, so dass der Wert der täglich erzeugten Nutzenergie oder der eingesetzten Primärenergie kleiner als ist als bei einer vollständig bewohnten Liegenschaft, so dass durch eine Korrektur (beispielsweise Multiplikation mit dem Kehrwert des Belegungsfaktors), in diesem Fall beispielsweise durch Multiplikation mit 2, die Nutzenergie bzw. Primärenergie rechnerisch ermittelt werden kann, die tatsächlich erzeugt bzw. eingesetzt worden wäre, wenn die Liegenschaft komplett belegt wäre. Um Wärmeflüsse zwischen den beheizten bewohnten Wohnungen und den weitestgehend unbeheizten leerstehenden Wohnungen in die Korrektur mit einfließen zu lassen kann in einer möglichen Weiterbildung auch ein weiterer Korrekturfaktor zur Berechnung der Nutzenergie bzw. Primärenergie eingesetzt werden. Im vorangestellten Beispiel würde dies beispielsweise zu einer Multiplikation mit 1,75 anstelle von 2 führen.

Die für das beschriebene Verfahren benötigten Heizungsanlagenparameter sind im Wesentlichen die Messwerte der erzeugten Nutzenergie sowie die Messwerte der eingesetzten Primärenergie, die durch jeweilige Zähler am Ort der Liegenschaft bereitgestellt werden können. Es kann demnach im Rahmen des erfindungsgemäßen Verfahrens vorgesehen sein, in Abhängigkeit dieser Zählerwerte und gegebenenfalls weiterer gemessener Außentemperaturen oder aber auch aus Wetterdatenbanken ausgelesener Außentemperaturen, das erfindungsgemäße Verfahren in einer Rechenanlage durchzuführen. Eine solche Rechenanlage kann beispielsweise am Ort der Liegenschaft beziehungsweise der Heizungsanlage realisiert sein und die Berechnung eines Überwachungswertes vornehmen, sowie eine eventuelle Signalisierung bei Änderung über einen Vergleichswert hinweg.

In einer anderen und insbesondere bevorzugten Ausführungsform kann es auch vorgesehen sein, dass zumindest die erzeugten Nutzenergie und die eingesetzte Primärenergie am Ort der Heizungsanlage messtechnisch erfasst werden und diese Werte durch eine Kommunikationsverbindung an eine Leitstelle kommuniziert werden, wobei die Berechnung des Überwachungswertes sodann in einer Rechenanlage der Leitstelle stattfindet. So wird die eigentliche Durchführung des Verfahrens, abgesehen von der Erfassung der zugrunde liegenden Messwerte, extern von der Liegenschaft durchgeführt und kann zum Beispiel verwendet werden, um einem überwachenden Unternehmen die Möglichkeit zu geben, im Rahmen einer Fernwartung oder Fernüberwachung Heizungsanlagen energetisch zu bewerten.

Bei sämtlichen Ausführungen des Verfahrens kann es beispielsweise vorgesehen sein, dass der Vergleichswert, beziehungsweise ein für einen Vergleich herangezogener Grenzwert nicht statisch ist, sondern berechnet wird aus zeitlich zurückliegenden berechneten Überwachungswerten. Beispielsweise kann ein gleitender Mittelwert aus historisch zurückliegenden Überwachungswerten gebildet werden, um sodann feststellen zu können, ob in einer aktuellen Berechnung des Überwachungswertes plötzlich die Anlage aufgrund eines Fehlers unterhalb eines zuvor üblichen Anlagennutzungsgrades arbeitet. In einem solchen Fall wird demnach ein Vergleichswert üblicherweise unterschritten, so dass dies eine Signalisierung auslösen kann, um gegebenenfalls die Heizungsanlage zu warten.

Es kann ebenso vorgesehen sein, dass ein Vergleichswert statisch in einer Rechenanlage vorprogrammiert wird, und sich zum Beispiel ergibt aus Werten, die für die eingesetzte Heizungsanlage typisch sind. Unterschreitet ein Überwachungswert einen solchen Grenzwert, beziehungsweise unterschreitet einen Grenzwert um ein vorgegebenes Maß, so kann ebenso eine Signalisierung ausgelöst werden, die einen Fehlerzustand bedeuten kann. Wie bereits eingangs erwähnt, kann eine Signalisierung optisch, akustisch oder auf andere Art und Weise, beispielsweise auch durch Telekommunikation einer Nachricht erfolgen.

Mit diesem Verfahren kann ebenso festgestellt werden, wenn ein wartender Eingriff bei einer Heizungsanlage stattgefunden hat, der den Nutzungsgrad der Heizungsanlage auf ein höheres Maß bringt, wobei sodann beispielsweise nach einer Berechnung des Überwachungswertes festgestellt wird, dass ein neuer Überwachungswert über einem zuvor gegebenen Vergleichswert, beispielsweise einem solchen, der aus historisch zurückliegenden Überwachungswerten gebildet wird, liegt.

Auch in einem solchen Fall kann eine Signalisierung erfolgen, die sodann anzeigt, dass eine Wartung stattgefunden hat mit einer damit einhergehenden Verbesserung der Heizungsanlage. Das erfindungsgemäße Verfahren kann somit zum Beispiel zur Protokollierung von Wartungsarbeiten und deren Erfolg Verwendung finden.

Des Weiteren kann basierend auf dem vorherigen und dem neu verbesserten normierten Nutzungsgrad der Heizungsanlage der energetische, finanzielle oder ökologische Einsparungserfolg der Maßnahme bewertet werden.

Ein Ausführungsbeispiel der Erfindung wird weiterhin durch die nachfolgenden Figuren beschrieben, wobei die Figuren 1 und 2 den bereits eingangs genannten Zusammenhang des Standes der Technik repräsentieren.

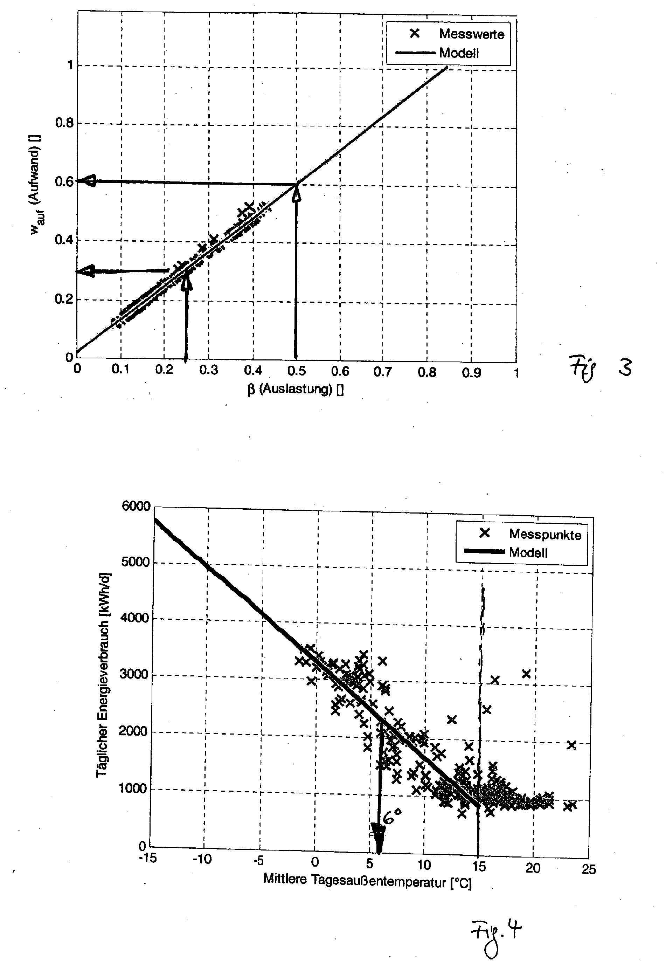

Die weiterhin dargestellte Figur 3 zeigt die lineare Abhängigkeit zwischen der Auslastung und der aufgewendeten normierten Primärenergie (Aufwand), die gemäß einer Ausführungsform der Erfindung verwendet wird, um das eingangs genannte Modell zu bilden. Hier wird in einem vorgegebenen zweiten Zeitintervall, beispielsweise von wenigstens einem Monat, bevorzugt mehreren Monaten, beispielsweise drei Monaten, jeweils mehrfach, zum Beispiel täglich, wenigstens ein Wertepaar erfasst, dass die Auslastung und den Aufwand repräsentiert.

Wie eingangs genannt, ergibt sich hierbei die Auslastung als Messwert der erzeugten Nutzenergie in Form von Zählerständen beziehungsweise Differenzen des wenigstens einen Wärmemengenzählers normiert auf die maximal mögliche Energieabgabe des wenigstens einen Wärmeerzeugers und weiterhin ergibt sich der Aufwand als Zählerstand beziehungsweise Zählerstandsdifferenz aufeinanderfolgender Zeitintervalle beispielsweise täglicher Zählerstanddifferenz der Primärenergie, normiert ebenso auf die maximale mögliche Energieabgabe des wenigstens einen Wärmeerzeugers.

Da hier bei der Primärenergie der Zählerstand üblicherweise ein verbrauchtes Volumen von Brennstoff darstellt, ist zur Ermittlung der eingesetzten Primärenergie der entsprechende Zählerstand beziehungsweise die Zählerstandsdifferenz zwischen zwei Erfassungen mit dem jeweiligen Brennwert des eingesetzten Brennstoffes zu multiplizieren.

Durch eine mathematische Modellbildungsmethode, wie beispielsweise eine lineare Regression, kann eine Gerade gebildet werden, welche die Abhängigkeit zwischen Auslastung und Aufwand darstellt und für die Durchführung des Verfahrens, das heißt die Berechnung des Überwachungswertes, gespeichert wird. Hierbei wird das Modell demnach gebildet für bevorzugter Weise sämtliche Wertepaare, die innerhalb des zweiten Zeitintervalls erfasst wurden. Gegebenenfalls können solche Wertepaare für die Bildung eines Modells ausgeblendet werden, die außerhalb einer Fehlertoleranz bezogen auf das bisherige Modell liegen, wie es eingangs beschrieben wurde.

Wie eingangs beschrieben, bedarf es der Bestimmung einer mittleren Auslastung oder auch eines mittleren Aufwandes, beispielsweise bezogen auf ein Standardwetterjahr, um in Abhängigkeit von dieser mittleren Auslastung bzw. dem mittleren Aufwand aus dem hier beschriebenen Modell der Figur 3 den jeweils anderen Wert zu bestimmen und durch Quotientenbildung (Aufwand / Auslastung) den mittleren Anlagenjahresnutzungsgrad als Überwachungswert zu ermitteln.

Gemäß der weiterhin dargestellten Figur 4 wird dies in einer bevorzugten Ausführungsform ebenso aus historisch zurückliegenden Messwerten eines dritten Zeitintervalls, insbesondere wenigstens eines Jahres ermittelt. Hier zeigt die Figur 4 eine Abhängigkeit zwischen den mittleren Tagesaußentemperaturen derjenigen Tage, an denen die Wertepaare erfasst werden und der an einem solchen Tag erzeugten Nutzenergie, die beispielsweise mit dem wenigstens einen Wärmemengenzähler ermittelt wird. Alternativ könnte das Modell auch für die Primärenergie gebildet werden.

Die Figur 4 zeigt hier, dass die Wertepaare unterhalb einer mittleren Tagesaußentemperatur von zum Beispiel 15 °C durch ein lineares Modell, nämlich hier eine Gerade, beschrieben werden können. Bei mittleren Tagesaußentemperaturen von über 15°C ergibt sich gegenüber der Gerade, die eine Witterungsabhängigkeit des Heizbetriebes zeigt, hingegen ein im Wesentlichen täglich konstanter Energieverbrauch, der durch den wenigstens einen Wärmemengenzähler erfasst wird. Es ergeben sich so im Wesentlichen zwei verschiedene Modelle, nämlich eines, welches die Abhängigkeit bei witterungsabhängiger Beheizung der Liegenschaft zeigt und eines bei witterungsunabhängiger Beheizung, wie zum Beispiel nur der Brauchwassererzeugung.

Es kann nun aus sämtlichen Wertepaaren, die der wenigstens einen Modellbildung zugrunde liegen oder aber aus einer Wetterdatenbank für das betrachtete dritte Zeitintervall, wie hier wenigstens ein Jahr, die mittlere Außentemperatur aller Heiztage bestimmt werden, die hier beispielsweise bei etwa 6°C ermittelt wird.

Aus dem wenigstens einen beziehungsweise hier bevorzugter Weise zwei gebildeten Modellen ergibt sich, dass abzüglich des Nutzernergieverbrauches der Tage mit witterungsunabhängiger Beheizung sich bei 6°C ein witterungsabhängiger Energieverbrauch von etwa 1300 Kilowattstunden pro Tag ergibt. Hieraus ergibt sich für den witterungsabhängigen Betrieb bei einer insgesamt vorliegenden mittleren gemessenen oder aus einer Wetterdatenbank erhaltenen Anzahl von 276,6 Heiztagen ein Energieverbrauch von ungefähr 360 Megawattstunden pro Jahr für den witterungsabhängigen Heizbetrieb.

Hinzu kommt ein Energieverbrauch für den witterungsunabhängigen Heizbetrieb, wie beispielsweise für die Warmwasserversorgung, mit einem Wert von etwa 1000 Kilowattstunden pro Tag mal 365 Tage, somit also etwa 365 Megawattstunden pro Jahr für den witterungsunabhängigen Heizbetrieb, mithin demnach insgesamt ungefähr 725 Megawattstunden pro Jahr und demnach ungefähr zwei Megawattstunden pro Tag als Energiekennwert, was einer mittleren Tagesleistung von 83 Kilowatt entspricht. In der Annahme, dass in einer größeren Liegenschaft Wärmemengenerzeuger von einer maximalen Leistung von insgesamt etwa 330 Kilowatt bzw. einer maximal möglichen Energieerzeugung von 7,92 Megawattstunden am Tag zum Einsatz kommen, ergibt sich demnach bei dieser Beispielbetrachtung aus dem Energiekennwert der Liegenschaft und der benannten maximalen Leistung von 330 Kilowatt bzw. der maximal möglichen Energieabgabe am Tag, dass eine mittlere Auslastung von 25% vorliegt.

In Kenntnis dieser erfindungsgemäß bestimmten mittleren Auslastung ergibt das zugrunde liegende Modell der Figur 3, dass bei einem Auslastungswert von etwa 0,25 (=25%) sich ein Aufwandswert von etwa 0,31 ergibt, so dass der Quotient aus mittlerer Auslastung und dem zugeordneten Aufwand einen Wert von etwa 80% darstellt, der dem Überwachungswert, dass heißt dem mittleren Jahresanlagennutzungsgrad entspricht.

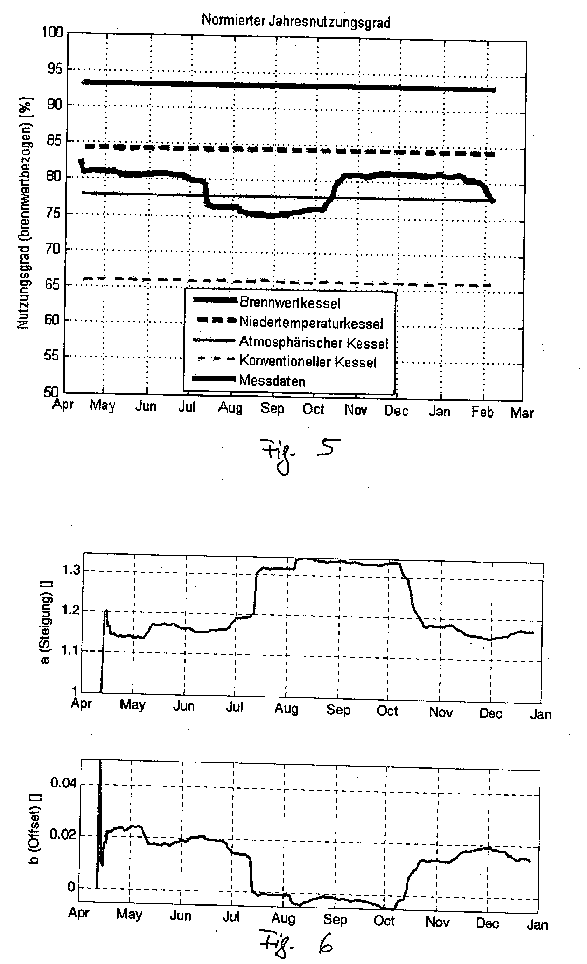

Betrachtet man die Figur 5, so zeigt sich, dass mit dem erfindungsgemäßen Verfahren dieser mittlere Jahresnutzungsgrad fortschreitend überwacht werden kann und verglichen wird, hier mit einem beispielhaften Grenzwert von 79%, dessen Unterschreitung sodann zur Signalisierung führen kann. Es besteht demnach die Möglichkeit mit dem erfindungsgemäßen Verfahren eine fortwährende energetische Bewertung der überwachten Heizungsanlage vorzunehmen.

Die Figur 6 zeigt weiterhin, dass das Modell, welches der Figur 3 zum Beispiel in der Art einer Geradengleichung von *ω*_{auf}(t)=a(t) x β(t) + b(t) zugrunde liegt, zeitlich variabel ist. So zeigt nämlich diese Figur 6 bezogen auf die vorgenannte Geradengleichung, die über die Monate hinweg vorliegende Änderung der Parameter b, dass heißt des Offsets der Gerade zur x-Achse und der Steigung a. Auch hier spiegelt der zeitliche Verlauf dieser Parameter des Modells beziehungsweise der Geradengleichung den in der Figur 6 anhand des Überwachungswertes des Anlagennutzungsgrades beschriebenen Fall der Grenzwertunterschreitung wieder, nämlich dadurch, dass sich in gleicher Weise etwa Mitte Juli eine signifikante Änderung zum einen der Steigung wie auch des Offsets des Modells ergibt, woraus sich der mittlere Anlagennutzungsgrad berechnet.

Es besteht daher in alternativer Weise ebenso die Möglichkeit nicht zwingend aus dem jeweiligen Modell den Anlagennutzungsgrad als Überwachungswert zu berechnen, sondern es kann alternativ in äquivalenter Weise auch ein Wert als Überwachungswert bestimmt werden, der von dem Jahresanlagennutzungsgrad abhängig ist, beziehungsweise von dem der Jahresanlagennutzungsgrad abhängig ist.

Alternativ kann demnach eine Grenzwertüberschreitung sowohl des Offsets als auch der Steigung der Geradengleichung beziehungsweise des linearen Modells ausgewertet werden, um zu einer Signalisierung zu kommen.

Des Weiteren besteht bei der Schätzung der Parameter a und b die Möglichkeit die Schätzwerte in einen physikalisch sinnvollen Parameterraum zu projizieren. In Figur 6 erkennt man beispielsweise, dass der Parameter b zeitweise unter Null liegt, was aus physikalischer Sicht unsinnig erscheint. Hier würde es sich anbieten, den Parameter b in ein positives Intervall zu projezieren.

Wie bereits eingangs erwähnt, kann der Überwachungswert mit einem statisch konstanten Vergleichswert verglichen werden, der beispielsweise in der Rechenanlage vorgehalten wird. Dieser Vergleichswert kann zum Beispiel ein Wert sein, der sich aus typischen Werten bestimmter Heizungsanlagenarten, wie beispielsweise Brennwertkesseln, Niedertemperaturkessel, atmosphärischer Kessel, etc, wie es ebenso in der Figur 5 visualisiert ist. Es kann so verglichen werden, ob die konkret eingesetzte Heizung ihrer Bauart entsprechend einen genügenden Überwachungswert aufweist oder die Heizungsanlage in ihrem Betrieb eine Korrektur benötigt.

Ebenso kann, wie eingangs erwähnt, auch der Vergleichswert zeitlich variabel sein und sich zum Beispiel aus zurückliegend bestimmten Überwachungswerten, zum Beispiel als gleitender Mittelwert oder auch in einer anderen Art der historischen Berücksichtigung von berechneten Überwachungswerten ergibt.

Des Weiteren ist es möglich, den Vergleichswert an die mittlere Auslastung der Heizungsanlage zu koppeln, welche sich beispielsweise durch eine energetische Sanierung des Gebäudes ändern kann. Halbiert sich beispielsweise der Energiebedarf einer Liegenschaft aufgrund verbesserter Dämmung, so halbiert sich ebenfalls die mittlere Auslastung, was zu einer Verschlechterung des mittleren Jahresnutzungsgrades führt. Ein entsprechender Überwachungswert sollte in einem solchen Fall angepasst werden.

## Patentansprüche

1. Verfahren zur Überwachung einer Heizungsanlage, bei dem zeitlich wiederholend mit jedem Ablauf eines ersten Zeitintervalles ein Überwachungswert der Heizungsanlage berechnet wird, welcher einen Anlagennutzungsgrad repräsentiert oder von dem der Anlagennutzungsgrad abhängig ist oder der von dem Anlagennutzungsgrad abhängig ist, **dadurch gekennzeichnet, dass** die Berechnung anhand eines zeitlich variablen Modells in Abhängigkeit einer mittleren Auslastung der Heizungsanlage erfolgt, wobei das Modell die Abhängigkeit zwischen der Auslastung der Heizungsanlage und der aufgewendeten normierten Primärenergie beschreibt und wobei das Modell vor der Berechnung des Überwachungswertes jeweils nach Ablauf eines zweiten Intervalles gebildet oder geändert wird in Abhängigkeit von messtechnisch zuvor in dem zweiten Zeitintervall erfassten Heizungsanlagenparametern und der Überwachungswert mit einem Vergleichswert, insbesondere einem gespeicherten Grenzwert verglichen wird, wobei bei einer Änderung des berechneten Überwachungswertes über den Vergleichswert hinweg eine Signalisierung der Änderung durchgeführt wird.

2. Verfahren nach Anspruch 1, **dadurch gekennzeichnet, dass** das Modell die Abhängigkeit des Anlagennutzungsgrades von der Auslastung beschreibt, wobei zur Bildung des Modells innerhalb des zweiten Zeitintervalls, beispielsweise von ein bis drei Monaten, mehrfach, beispielsweise täglich, messtechnisch die erzeugte Nutzenergie und die eingesetzte Primärenergie bestimmt wird, insbesondere mittels Wärmemengenzähler und Zähler der verbrauchten Brennstoffmenge und durch Quotientenbildung dieser Messwerte der jeweilige Anlagennutzungsgrad ermittelt wird und die bei diesem Anlagennutzungsgrade vorliegende Auslastung bestimmt wird durch denselben Messwert der erzeugten Nutzenergie dividiert durch die maximal mögliche Energieabgabe der Heizungsanlage im betrachteten Zeitraum, in welchem mehrfach pro zweitem Intervall diese Messung stattfindet.

3. Verfahren nach Anspruch 1, **dadurch gekennzeichnet, dass** das Modell die Abhängigkeit, insbesondere die lineare Abhängigkeit zwischen der Auslastung der Heizungsanlage und der aufgewendeten normierten Primär-Energie beschreibt, wobei zur Bildung des Modells die Auslastung und die aufgewendete Primär-Energie innerhalb des zweiten Zeitintervalls, insbesondere innerhalb eines Zeitintervalls von ein bis drei Monaten mehrfach, insbesondere täglich messtechnisch erfasst werden und anhand der erfassten Messwerte eine das Modell bildende und die Abhängigkeit beschreibende Funktion, insbesondere lineare Funktion gebildet oder eine bereits zuvor gebildete Funktion geändert wird.

4. Verfahren nach Anspruch 2 oder 3, **dadurch gekennzeichnet, dass** im zweiten Zeitintervall ein jeweils erfasstes Wertepaar, insbesondere Anlagennutzungsgrad und Auslastung oder von Auslastung und normierter Primär-Energie, das noch nicht in die Bildung / Änderung des Modells eingeflossen ist überprüft wird auf eine Abweichung zumindest eines der Werte des Wertepaares von dem bisherigen Modell und wenn die Abweichung einen vorgegebenen Wert überschreitet eine Signalisierung der Überschreitung erfolgt und/oder das jeweilige Wertepaar von der Neubildung / Änderung des Modells ausgeschlossen wird.

5. Verfahren nach einem der vorherigen Ansprüche 2 bis 4, **dadurch gekennzeichnet, dass** die mittlere Auslastung oder der mittlere Aufwand der Heizungsanlage bestimmt wird aus einem auf ein Standardwetterjahr bezogenen Energiekennwert der die Heizungsanlage aufweisenden Liegenschaft und der maximal möglichen Energieabgabe oder Leistung des wenigstens einen Wärmeerzeugers der Heizungsanlage.

6. Verfahren nach Anspruch 5, **dadurch gekennzeichnet, dass** in einer Rechenanlage zur Berechnung des Überwachungswertes der Energiekennwert aus einem zur Liegenschaft gehörigen Energiepass gespeichert ist.

7. Verfahren nach Anspruch 5, **dadurch gekennzeichnet, dass** der Energiekennwert ermittelt wird aus der messtechnisch erfassten, durch die Heizungsanlage erzeugten Nutzenergie oder Primärenergie.

8. Verfahren nach Anspruch 7, **dadurch gekennzeichnet, dass** zur Ermittlung des Energiekennwertes in einem zurückliegenden dritten Zeitintervall, insbesondere wenigstens eines Jahres, die erzeugte Nutzenergie pro Zeitintervall oder die eingesetzte Primärenergie pro Zeitintervall der Heizungsanlage und die mittlere Außentemperatur des Zeitintervalls erfasst und aus den erfassten Werten wenigstens ein insbesondere lineares Modell gebildet wird, aus dem/denen in Abhängigkeit der mittleren Temperatur aller geheizten Zeitintervalle eines Standardjahres die mittlere witterungsabhängige Nutzenergie oder Primärenergie eines geheizten Zeitintervall, insbesondere Heiztages und die witterungsunabhängige Nutzenergie oder Primärenergie eines Zeitintervalls bestimmt wird.

9. Verfahren nach Anspruch 8, **dadurch gekennzeichnet, dass** der Wert der pro Zeitintervall erfassten, insbesondere täglich erzeugten Nutzenergie oder pro Zeitintervall, insbesondere täglich eingesetzten Primärenergie vor der Bildung / Änderungen des wenigstens einen Modells zur Ermittlung des Energiekennwertes in Abhängigkeit einer Leerstandsinformation der Liegenschaft korrigiert wird.

10. Verfahren nach Anspruch 8 oder 9, **dadurch gekennzeichnet, dass** die mittlere Aussentemperatur aller geheizten Zeitintervalle, insbesondere aller Heiztage aus den am Ort der Liegenschaft mit einem Temperatursensor gemessenen Aussentemperaturen der geheizten Zeitintervall, insbesondere Heiztage bestimmt wird oder die mittlere Außentemperatur aus einer liegenschaftsexternen Wetterdatenbank ausgelesen wird.

11. Verfahren nach einem der vorherigen Ansprüche, **dadurch gekennzeichnet, dass** zumindest die erzeugte Nutzenergie und die eingesetzte Primärenergie am Ort der Heizungsanlage meßtechnisch erfasst werden und durch eine Kommunikationsverbindung an eine Leitstelle kommuniziert werden, wobei die Berechnung des Überwachungswertes in einer Rechenanlage der Leitstelle stattfindet.

12. Verfahren nach einem der vorherigen Ansprüche, **dadurch gekennzeichnet, dass** der Vergleichswert, insbesondere ein für einen Vergleich herangezogener Grenzwert berechnet wird aus zeitlich zurückliegenden berechneten Überwachungswerten.

## Claims

1. Method for monitoring a heating system, in which method a monitoring value of the heating system, which monitoring value represents a degree of use of the system or on which the degree of use of the system is dependent or which is dependent on the degree of use of the system, is repeatedly calculated each time a first time interval elapses, **characterized in that** the calculation takes place on the basis of a variable-time model depending on an average utilization of the heating system, wherein the model describes the dependency between the utilization of the heating system and the standardized primary energy expended, and wherein the model is formed or modified, before the calculation of the monitoring value in each case after a second interval has elapsed, depending on heating system parameters which were previously recorded by measurement in the second time interval, and the monitoring value is compared with a comparison value, in particular a stored limit value, wherein an indication of the modification is carried out in the event of a modification of the calculated monitoring value beyond the comparison value.

2. Method according to Claim 1, **characterized in that** the model describes the dependency of the degree of use of the system on the utilization, wherein, in order to form the model, the useful energy generated and the primary energy used are determined by measurement several times, for example daily, within the second time interval, for example of from one to three months, in particular by means of heat flowmeters and meters for the quantity of fuel consumed, and the respective degree of use of the system is ascertained by quotient formation of these measurement values, and the utilization which is present with this degree of use of the system is determined by the same measurement value of the useful energy generated divided by the maximum possible energy output of the heating system in the period of time under consideration in which this measurement takes place several times every second interval.

3. Method according to Claim 1, **characterized in that** the model describes the dependency, in particular the linear dependency, between the utilization of the heating system and the standardized primary energy expended, wherein, in order to form the model, the utilization and the primary energy expended are recorded by measurement several times, in particular daily, within the second time interval, in particular within a time interval of from one to three months, and a function which forms the model and describes the dependency, in particular a linear function, is formed or a function which was already previously formed is modified on the basis of the measurement values recorded.

4. Method according to Claim 2 or 3, **characterized in that**, in the second time interval, a respectively recorded pair of values, in particular degree of use of the system and utilization or utilization and standardized primary energy, which has not yet been included in the formation/modification of the model is checked for a deviation in at least one of the values of the pair of values from the previous model and, if the deviation overshoots a prespecified value, an indication of the overshooting takes place and/or the respective pair of values is excluded from the reformation/modification of the model.

5. Method according to one of the preceding Claims 2 to 4, **characterized in that** the average utilization or the average outlay of the heating system is determined from an energy characteristic value, which is based on a standard weather year, of the property which has the heating system and the maximum possible energy output or power of the at least one heat generator of the heating system.

6. Method according to Claim 5, **characterized in that** the energy characteristic value from an energy certificate which is associated with the property is stored in a computer system for calculating the monitoring value.

7. Method according to Claim 5, **characterized in that** the energy characteristic value is ascertained from the useful energy or primary energy which is generated by the heating system and recorded by measurement.

8. Method according to Claim 7, **characterized in that**, in order to ascertain the energy characteristic value in a previous third time interval, in particular at least one year, the useful energy generated per time interval or the primary energy used per time interval of the heating system and the average outside temperature during the time interval are recorded and at least one, in particular linear, model is formed from the recorded values, the average weather-dependent useful energy or primary energy of a heated time interval, in particular heating day, and the weather-independent useful energy or primary energy of a time interval are determined from the said model/models depending on the average temperature of all heated time intervals of a standard year.

9. Method according to Claim 8, **characterized in that** the value of the useful energy recorded per time interval, in particular generated daily, or primary energy used per time interval, in particular daily, is corrected before the formation/modifications of the at least one model for ascertaining the energy characteristic value depending on an item of vacancy information of the property.

10. Method according to Claim 8 or 9, **characterized in that** the average outside temperature during all heated time intervals, in particular all heating days, is determined from the outside temperatures during the heated time interval, in particular heating days, which are measured on site at the property by a temperature sensor, or the average outside temperature is read out from a weather database which is external to the property.

11. Method according to one of the preceding claims, **characterized in that** at least the useful energy generated and the primary energy used are recorded by measurement at the site of the heating system and are communicated to a control centre via a communications link, wherein the calculation of the monitoring value takes place in a computer system of the control centre.

12. Method according to one of the preceding claims, **characterized in that** the comparison value, in particular a limit value which is used for a comparison, is calculated from past calculated monitoring values.

## Revendications

1. Procédé de surveillance d'une installation de chauffage, procédé dans lequel une valeur de surveillance de l'installation de chauffage est calculée de manière temporellement itérative à chaque expiration d'un premier intervalle de temps, laquelle valeur représente un taux d'utilisation de l'installation ou dépend du taux d'utilisation de l'installation ou valeur de laquelle le taux d'utilisation de l'installation dépend, **caractérisé en ce que** le calcul est effectué sur la base d'un modèle variable dans le temps en fonction d'une utilisation maximale moyenne de l'installation de chauffage, le modèle décrivant la relation de dépendance entre l'utilisation maximale de l'installation de chauffage et l'énergie primaire normalisée utilisée et le modèle étant formé ou modifié avant le calcul de la valeur de surveillance après expiration d'un deuxième intervalle en fonction de paramètres de l'installation de chauffage mesurés précédemment dans le deuxième intervalle de temps, et la valeur de surveillance étant comparée à une valeur de comparaison, notamment une valeur limite mémorisée, un signalement d'une variation étant effectué si la valeur de surveillance calculée varie au-delà de la valeur de comparaison.

2. Procédé selon la revendication 1, **caractérisé en ce que** le modèle décrit la relation de dépendance du taux d'utilisation vis-à-vis de l'utilisation maximale, pour former le modèle dans le deuxième intervalle de temps, par exemple de un à trois mois, plusieurs fois, par exemple quotidiennement, l'énergie utile générée et l'énergie primaire utilisée étant déterminées par une technique de mesure, en particulier à l'aide d'un calorimètre et d'un compteur de quantité de carburant utilisée et le taux d'utilisation de l'installation respectif étant déterminé par formation du quotient de ces valeurs de mesure, et l'utilisation maximale pour ce taux d'utilisation de l'installation étant déterminée par la même valeur de mesure de l'énergie utile générée divisée par la production d'énergie maximale possible de l'installation de chauffage dans l'intervalle de temps considéré au cours duquel cette mesure a lieu plusieurs fois dans le deuxième intervalle.

3. Procédé selon la revendication 1, **caractérisé en ce que** le modèle décrit la relation de dépendance, en particulier la relation de dépendance linéaire entre l'utilisation maximale de l'installation de chauffage et l'énergie primaire normalisée utilisée, pour former le modèle, l'utilisation et l'énergie primaire utilisée étant détectées plusieurs fois, notamment quotidiennement, dans le deuxième intervalle de temps, notamment dans un intervalle de temps d'un à trois mois, et une fonction formant le modèle et décrivant la relation de dépendance, notamment une fonction linéaire, étant formée ou une fonction précédemment formée étant modifiée sur la base des valeurs de mesure acquises.

4. Procédé selon la revendication 2 ou 3, **caractérisé en ce que,** dans le deuxième intervalle de temps, une paire de valeurs respectivement acquises, en particulier le taux d'utilisation de l'installation et l'utilisation maximale ou l'utilisation maximale et l'énergie primaire normalisée, laquelle paire de valeur n'a pas encore été incluse dans la formation/la modification du modèle, est vérifiée pour détecter un écart d'au moins une des valeurs de la paire de valeurs par rapport au modèle précédent et, si l'écart devient supérieur à une valeur prédéterminée, un signalement du dépassement est effectué et/ou la paire de valeurs respective est exclue de la formation/la modification du modèle.

5. Procédé selon l'une des revendications 2 à 4 précédentes, **caractérisé en ce que** l'utilisation maximale moyenne ou l'emploi moyen de l'installation de chauffage est déterminé à partir d'une valeur d'énergie caractéristique, lié à une année météorologique standard, de la propriété comportant l'installation de chauffage et de l'apport énergétique ou de la puissance maximal possible de l'au moins un générateur de chaleur de l'installation de chauffage.

6. Procédé selon la revendication 5, **caractérisé en ce que** la valeur d'énergie caractéristique, provenant d'un certificat de performance énergique appartenant à la propriété, est mémorisée dans une installation informatique destinée à calculer la valeur de surveillance.

7. Procédé selon la revendication 5, **caractérisé en ce que** la valeur d'énergie caractéristique est déterminée par une technique de mesure à partir de l'énergie utile, générée par l'installation de chauffage, ou de l'énergie primaire.

8. Procédé selon la revendication 7, **caractérisé en ce que** l'énergie utile générée par intervalle de temps ou l'énergie primaire utilisée par intervalle de temps de l'installation de chauffage et la température extérieure moyenne de l'intervalle de temps sont détectées pour déterminer la valeur d'énergie caractéristique dans un troisième intervalle de temps précédent, en particulier au moins un an et au moins un modèle linéaire est formé à partir de valeurs détectées, modèle à partir duquel l'énergie utile moyenne dépendante du temps ou l'énergie primaire d'un intervalle de temps chauffé, en particulier les jours de chauffage et l'énergie utile indépendante du temps ou l'énergie primaire d'un intervalle de temps est déterminée en fonction de la température moyenne de tous les intervalles de temps de chauffage d'une année standard.

9. Procédé selon la revendication 8, **caractérisé en ce que** la valeur de l'énergie primaire détectée par intervalle de temps, notamment générée quotidiennement, ou l'énergie primaire par intervalle de temps, notamment utilisée quotidiennement, est corrigée avant la formation/les modifications de l'au moins un modèle pour déterminer la valeur d'énergie caractéristique en fonction de l'information de vacance de la propriété.

10. Procédé selon la revendication 8 ou 9, **caractérisé en ce que** la température extérieure moyenne de tous les intervalles de temps de chauffage, en particulier de tous les jours de chauffage est déterminée à partir des températures extérieures, mesurées sur le lieu de la propriété à l'aide d'un capteur de température, des intervalles de temps de chauffage, en particulier des jours de chauffage ou la température extérieure moyenne est lue dans une base de données météorologique extérieure à la propriété,

11. Procédé selon l'une des revendications précédentes, **caractérisé en ce qu'**au moins l'énergie utile générée et l'énergie primaire utilisée sont détectées sur le lieu de l'installation de chauffage par une technique de mesure et sont communiquées à un centre de commande par le biais d'une liaison de communication, le calcul de la valeur de surveillance étant effectué dans une installation informatique du centre de commande.

12. Procédé selon l'une des revendications précédentes, **caractérisé en ce que** la valeur de comparaison, en particulier une valeur limite utilisée pour une comparaison, est calculée à partir de valeurs de surveillance calculées dans le passé.
